# EUROPEAN PATENT APPLICATION

(11) **EP 4 836 225 A1**
(43) Date of publication of application: **04.11.2026**
(21) Application number: 26175548.2
(22) Date of filing: 29.04.2026
(51) Int. Cl.: H02J 3/32, H02J 7/35, H02J 101/24, H02J 105/12

(54) **CONTROL METHOD OF ENERGY MANAGEMENT SYSTEM, ENERGY MANAGEMENT SYSTEM AND CONTROL DEVICE**

(30) Priority: 30.04.2025 CN 202510574173
(71) Applicant: Shenzhen Anker Solix Technology Co., Ltd., Shenzhen City, Guangdong Province 518101 (CN)
(72) Inventor: LI, Yiyong, Shenzhen City 518101 (CN); YANG, Wenke, Shenzhen City 518101 (CN); MIAO, Jinsong, Shenzhen City 518101 (CN); CHEN, Wei, Shenzhen City 518101 (CN); ZHAO, Jianwei, Shenzhen City 518101 (CN)
(74) Representative: De Arpe Tejero, Manuel

(57) **Abstract**

An energy management system, a control method and control device (20) thereof are provided. The energy management system may include: a first current sensing module (CT1) configured to acquire a first current direction on a main power line, a second current sensing module (CT2) configured to acquire at least one of a second current direction or magnitude, and a first energy storage system (30). The energy management system may be configured to generate a regulation instruction to the first energy storage system (30) according to at least one of the first current direction, the second current direction or magnitude. The first energy storage system (30) may be configured to perform regulation of charge-discharge state according to the regulation instruction, so that load parameter on the first branch is less than or equal to the rated parameter of the first branch.

## Description

### TECHNICAL FIELD

The present disclosure relates to the field of energy management technologies, in particular to a control method of an energy management system, an energy management system and a control device.

### BACKGROUND

Existing energy storage systems are all installed and connected to a power distribution apparatus (e.g., a distribution box). Power sampling or electrical current sampling are all performed by means of wired electric meters, which results in installation difficulties and high cost. Moreover, there is no power limiting protection on a branch, and the situation of exceeding rated parameter of the branch may occur during operation, which may cause switch tripping at the slightest, and burn out a circuit in severe cases.

### SUMMARY

According to a first aspect of the present disclosure, an energy management system is provided. The energy management system may include a first current sensing module, a second current sensing module, and a first energy storage system. The first current sensing module may be configured to be coupled to a main power line of a power grid, and may be configured to acquire a first current direction on the main power line. The second current sensing module may be configured to be coupled to a first branch of an indoor wiring, and may be configured to acquire at least one of a second current direction or magnitude on the first branch. Electrical equipment may be coupled on the first branch. The first energy storage system may be configured to be coupled to the first branch. The energy management system may be configured to generate a regulation instruction according to at least one of the first current direction, the second current direction or magnitude. The first energy storage system may be configured to perform regulation of charge-discharge state according to the regulation instruction, and keep load parameter on the first branch less than or equal to the rated parameter of the first branch. The load parameter may include load power or load current.

According to a second aspect of the present disclosure, a control method of the energy management system provided in the above technical solution is provided. The control method may include: acquiring, by the control device, the first current direction, at least one of the second current direction or magnitude; and, sending, by the control device, the regulation instruction to the first energy storage system according to at least one of the first current direction, the second current direction or magnitude, and causing the first energy storage system to perform regulation of charge-discharge state according to the regulation instruction. The load parameter on the first branch is less than or equal to the rated parameter of the first branch.

According to a third aspect of the present disclosure, a control device for the above energy management system may be provided. The control device may include a communication interface and at least one processor coupled to the communication interface. The at least one processor may be configured to: receive, via the communication interface, first data indicative of a first current direction from a first current sensing module configured to be coupled to a main power line; receive, via the communication interface, second data indicative of at least one of a second current direction or magnitude from a second current sensing module configured to be coupled to a first branch of an indoor wiring; generate a regulation instruction according to at least one of the first data or the second data; and, send, via the communication interface, the regulation instruction to the first energy storage system, to cause the first energy storage system to perform a regulation of a charge-discharge state, such that a load parameter on the first branch is less than or equal to a rated parameter of the first branch.

The control method of the energy management system, the energy management system, and the control device thereof provided by the present disclosure may use the first current sensing module to acquire the first current direction on the main power line, and use the second current sensing module to acquire at least one of the second current direction or magnitude on the first branch. The energy management system may perform regulation of charge-discharge state on the first energy storage system on the first branch, and control the load parameter on the first branch to be less than or equal to the rated parameter of the first branch, so as to perform power limiting or current limiting protection on the first branch and ensure electricity use safety.

### BRIEF DESCRIPTION OF THE DRAWINGS

To explain the technical solutions in embodiments of the present disclosure more clearly, drawings required for describing the embodiments will be briefly introduced below. Obviously, the drawings in the following description are only some embodiments of the present disclosure. Those of ordinary skill in the art may obtain other drawings according to these drawings without creative work.
Fig. 1 is a structural schematic diagram of an energy management system according to an embodiment of the present disclosure.
Fig. 2 is a structural schematic diagram of an energy management system according to an embodiment of the present disclosure.
Fig. 3 is a structural schematic diagram of an energy management system according to an embodiment of the present disclosure.
Fig. 4 is a schematic flow chart of an embodiment of a control method of an energy management system provided by the present disclosure.

### DETAILED DESCRIPTION

It should be expressly understood that while the background and certain embodiments describe wired connections as having high deployment costs and specify the use of wireless modules, the core innovative energy dispatching and branch protection algorithms of the present disclosure are fully applicable to, and inherently encompass, wired communication architectures (e.g., RS-485, Ethernet, PLC, CAN bus). The use of wireless communication is merely an exemplary embodiment.

For consistent expression in the present disclosure, relevant terms may be defined as follows: load parameters may include load power or load current; discharge parameters of an energy storage system may include discharge power or discharge current; charge parameters of the energy storage system may include charge power or charge current; rated parameters of a first branch may include rated power or rated current. In the comparison, calculation and control logic expression between load parameters and rated parameters, load power may match with discharge power, charge power and rated power, and load current may match with discharge current, charge current and rated current, and parameters of the same type may be consistent in dimension and may match with each other.

The technical solutions in the embodiments of the present disclosure may be clearly and completely described below in conjunction with the accompanying drawings in the embodiments of the present disclosure. The specific embodiments described herein are only used to explain the present disclosure, and are not intended to limit the present disclosure. In addition, for the convenience of description, instead of all the structures, only the parts related to the present disclosure are illustrated in the accompanying drawings. All other embodiments obtained by those of ordinary skill in the art based on the embodiments in the present disclosure without creative work shall fall within the protection scope of the present disclosure.

Reference to an "embodiment" herein means that a specific feature, structure, or characteristic described in conjunction with the embodiment may be included in at least one embodiment of the present disclosure. The appearance of the phrase in various places of the specification does not necessarily refer to a same embodiment, nor is it an independent or alternative embodiment mutually exclusive with other embodiments. Those skilled in the art explicitly and implicitly understand that the embodiments described herein may be combined with other embodiments.

There is no power limiting protection on the branch of existing energy storage system, and the situation of exceeding the rated parameter of the branch may occur during operation, which may cause switch tripping at the slightest, and burn out the circuit in severe cases.

Based on this, the present disclosure proposes to use a first current sensing module to acquire a first current direction on a main power line, and use a second current sensing module to acquire at least one of a second current direction or magnitude on a first branch. The present disclosure may perform regulation of charge-discharge state on the first energy storage system on the first branch, and control load parameter on the first branch to be less than or equal to rated parameter of the first branch, so as to perform power limiting protection on the first branch and to ensure electricity use safety. For details, please refer to any of the following embodiments.

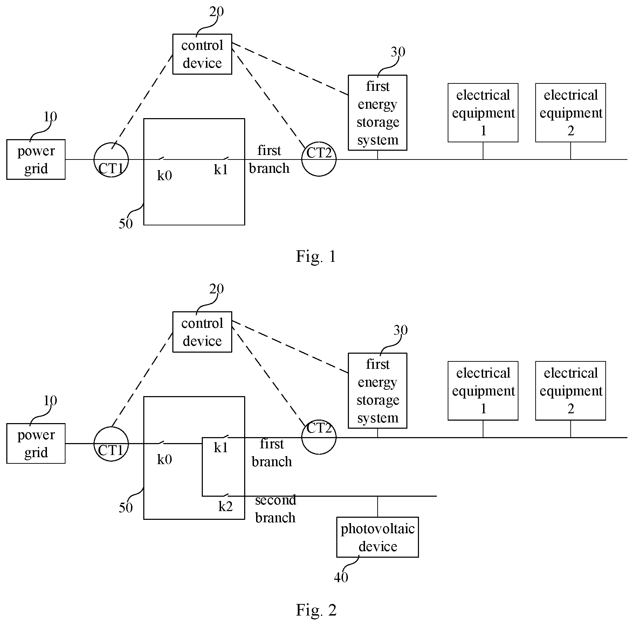

As illustrated in Fig. 1, Fig. 1 is a structural schematic diagram of an energy management system according to an embodiment of the present disclosure. The energy management system may include a first current sensing module CT1, a second current sensing module CT2, a first energy storage system 30, a control device 20 and a power distribution apparatus 50.

The first current sensing module CT1 may be configured to be coupled to the main power line of a power grid 10, and may be configured to acquire the first current direction on the main power line. In some embodiments, the first current sensing module CT1 may be a wireless current sensing module, and may include a current transformer and a wireless communication module. The current transformer may be sleeved on the main power line of the power grid 10 to acquire at least one of the first current direction or magnitude on the main power line, and then transmit the acquired at least one of the first current direction or magnitude through the wireless communication module, for example, to the control device 20, the first energy storage system 30, or another part of the energy management system, which is not limited herein. The arrangement location of the control device is not limited in the present disclosure. The control device may be integrated into the first energy storage system, independently disposed outside the first energy storage system, or distributed in the energy management system.

The second current sensing module CT2 may be configured to be coupled to a first branch of an indoor wiring, and may be configured to acquire at least one of the second current direction or magnitude on the first branch. Other electrical equipment may be coupled on the first branch, such as an electrical equipment 1 and electrical equipment 2 in Fig. 1. In some embodiments, the second current sensing module CT2 may be a wireless current sensing module, and may include a current transformer and a wireless communication module. The current transformer may be sleeved on the first branch of the indoor wiring to acquire at least one of the second current direction or magnitude on the first branch, and then transmit the acquired at least one of second current direction or magnitude on the first branch through the wireless communication module, for example, to the control device 20, the first energy storage system 30, or another part of the energy management system, which is not limited herein. In various embodiments of the present disclosure, the second current sensing module CT2 may be disposed between the power grid side and a load side of the first branch to detect the total current or net current flowing between the power grid and the first branch. The load side is used for arranging electrical equipment, the first energy storage system 30, or the like.

The first energy storage system 30 may be configured to be coupled to the first branch. In some embodiments, a number of coupling points (sockets) may be provided on the first branch. The first energy storage system 30 may be connected to a coupling point. The first energy storage system 30 may be configured to receive power from the first branch (charge), and supply power to the first branch (discharge). The first energy storage system 30 may collect its own charge and discharge parameters, and send the collected charge and discharge parameters to another part of the energy management system, such as the control device 20 or the like. The charge and discharge parameters may include charge parameters and discharge parameters, such as charge current, charge power, discharge current or discharge power as described above.

As illustrated in Fig. 1, the first energy storage system 30 and at least one electrical equipment may be connected in parallel to the load side of the first branch. Both the first energy storage system 30 and the at least one electrical equipment may be coupled to a side of the second current sensing module CT2 away from the main power line. With this arrangement, the second current sensing module CT2 may collect at least one of the magnitude or direction of the net current flowing into and out of the first branch from the power grid and another branch.

The energy management system may be configured to generate a regulation instruction according to at least one of the first current direction, the second current direction or magnitude. For example, the control device 20 of the energy management system may be in communication connection with the first current sensing module CT1, the first energy storage system 30 and the second current sensing module CT2. The control device 20 may be configured to generate, according to at least one of the first current direction, the second current direction or magnitude, a regulation instruction. The control device 20 may send the regulation instruction to the first energy storage system 30. The first energy storage system 30 may be configured to perform regulation of charge-discharge state according to the regulation instruction, so that the load parameter on the first branch is less than or equal to the rated parameter of the first branch.

Taking the load parameter as the load power for example, unless otherwise specified, the load power on the first branch is the power jointly consumed by all electrical equipment and the first energy storage system 30 on the first branch. When the first energy storage system 30 is in a charging state, the load power on the first branch may be the sum of the power of all electrical equipment on the first branch and the charging power of the first energy storage system 30. When the first energy storage system 30 is in a discharging state, the load power on the first branch may be the sum of the power consumed by all electrical equipment on the first branch.

Taking the load parameter as load current for example, when the first energy storage system 30 is in a charging state, the load current on the first branch may be the sum of the operating current of all electrical equipment on the first branch and the charging current of the first energy storage system 30. When the first energy storage system 30 is in a discharging state, the load current on the first branch may be the operating current of all electrical equipment on the first branch. At this time, the discharging current of the first energy storage system 30 may be used for the load and is not included in the branch load current.

In some embodiments, the control device 20 may include a smart electric meter. A processing module and a wireless communication module may be provided in the smart electric meter. The smart electric meter may be in wireless communication connection with the first current sensing module CT1, the first energy storage system 30 and the second current sensing module CT2. In some embodiments, the smart electric meter may be in wireless communication connection with the first current sensing module CT1, the first energy storage system 30 and the second current sensing module CT2.

In some embodiments, the first energy storage system 30 may be in communication connection with the first current sensing module CT1 and the second current sensing module CT2, and may be configured to generate the regulation instruction according to at least one of the first current direction, the second current direction or the magnitude.

For example, in a case where a first current flows to the indoor wiring along the first current direction, it is indicated that the power grid 10 is supplying power to the indoor wiring. In a case where the first current flows to the power grid 10 along the first current direction, it is indicated that the first energy storage system 30 or the like is supplying power to the power grid 10.

In some embodiments, when the first current flows to the indoor wiring along the first current direction, the energy management system may be further configured to: obtain a present discharge parameter of the first energy storage system 30; generate a first regulation instruction in response to the present discharge parameter being less than a total load parameter of the indoor wiring. The first energy storage system 30 may be further configured to: increase the present discharge parameter according to the first regulation instruction until the magnitude of the first current reaches a preset near-zero threshold. In the present disclosure, the preset near-zero threshold may be typically set in a range from 0 mA to 20 mA. That is, when the first energy storage system 30 is discharging, additional costs will be incurred if power is still supplied by the power grid. Therefore, when detecting that the first current flows to the indoor wiring along the first current direction and the present discharge parameter of the first energy storage system 30 is less than the total load parameter of the indoor wiring, the energy management system may generate the first regulation instruction to enable the first energy storage system 30 to increase the present discharge parameter according to the first regulation instruction until the magnitude of the first current reaches the preset near-zero threshold, so as to reduce the dependence on the power grid. The total load parameter of the indoor wiring may include a total load current or a total load power of the indoor wiring. The total load power of the indoor wiring may refer to the total power consumed by all electrical equipment indoor. The total load current of the indoor wiring may refer to the total operating current of all electrical equipment indoor during operation. When the energy storage system is in a charging state, the total load power of the indoor wiring may include the total charging power of all energy storage systems in the charging mode and the total power of all electrical equipment, and the total load current of the indoor wiring may include the charging current of all energy storage systems in the charging mode and the total current of all electrical equipment.

In some embodiments, the first regulation instruction may be generated by the first energy storage system 30.

In some embodiments, the first regulation instruction may be generated by the control device 20. In a case where the first current flows to the indoor wiring along the first current direction, the control device 20 may be configured to receive a present discharge parameter sent by the first energy storage system 30. In a case where the present discharge parameter is less than the total load parameter of the indoor wiring, the control device 20 may be configured to send a first regulation instruction to the first energy storage system 30. The first energy storage system 30 may be further configured to increase the present discharge parameter according to the first regulation instruction until the first current reaches the preset near-zero threshold, and substantially or completely stops flowing to the indoor wiring. That is, in a case where the first energy storage system 30 is discharging, additional costs will be incurred if the power grid still supply power. Therefore, in a case where the control device 20 detects that the first current flows to the indoor wiring along the first current direction and the present discharge parameter of the first energy storage system 30 is less than the total load parameter of the indoor wiring, the control device 20 may send the first regulation instruction to the first energy storage system 30, so that the first energy storage system 30 increases the present discharge parameter according to the first regulation instruction until the first current reaches the preset near-zero threshold, and substantially or completely stops flowing to the indoor wiring. In this way, dependence on the power grid may be reduced.

In some embodiments, when the first current flows to the power grid along the first current direction, the energy management system may be further configured to: obtain a present discharge parameter of the first energy storage system 30; generate a second regulation instruction in response to the present discharge parameter being greater than a total load parameter of the indoor wiring. The first energy storage system 30 may be further configured to reduce the present discharge parameter according to the second regulation instruction. That is, when the first energy storage system 30 is in discharge, if the first current flows to the power grid along the first current direction, it indicates that electric energy of the first energy storage system 30 is reversely supplied to the power grid, and the load of the indoor wiring does not fully consume the electric energy of the first energy storage system 30, resulting in waste. Therefore, when detecting that the first current flows to the power grid along the first current direction and the present discharge parameter of the first energy storage system 30 is greater than the total load parameter of the indoor wiring, the energy management system may generate the second regulation instruction to enable the first energy storage system 30 to reduce the present discharge parameter according to the second regulation instruction until the magnitude of the first current reaches the preset near-zero threshold, so as to reduce power supply to the power grid and decrease waste of electric energy in the first energy storage system 30.

In some embodiments, the second regulation instruction may be generated by the first energy storage system 30.

In some embodiments, the second regulation instruction may be generated by the control device 20. In a case where the first current flows to the power grid along the first current direction, the control device 20 may be further configured to receive the present discharge parameter sent by the first energy storage system 30. In a case where the present discharge parameter is greater than the total load parameter of the indoor wiring, the control device 20 may be configured to send a second regulation instruction to the first energy storage system 30. The first energy storage system 30 may be further configured to reduce the present discharge parameter according to the second regulation instruction. That is, in a case where the first energy storage system 30 is in discharge, if the first current flows to the power grid along the first current direction, it is indicated that the electric energy of the first energy storage system 30 is supplied to the power grid in a reverse direction, and the load of the indoor wiring does not fully use the electric energy of the first energy storage system 30, resulting in waste. Therefore, in a case where the control device 20 detects that the first current flows to the power grid along the first current direction and the present discharge parameter of the first energy storage system 30 is greater than the total load parameter of the indoor wiring, the control device 20 may send the second regulation instruction to the first energy storage system 30, so that the first energy storage system 30 reduces the present discharge parameter according to the second regulation instruction until the first current reaches the preset near-zero threshold, and substantially or completely stops flowing to the power grid, so as to reduce the power supply to the power grid. In this way, the waste of electric energy in the first energy storage system 30 may be reduced.

A circuit or loop may be set for the main power line and the first branch through the power distribution apparatus 50. That is, the main power line, the first branch and the power distribution apparatus may form a service entrance circuit. The main power line and the first branch may conduct or disconnect the service entrance circuit through the power distribution apparatus. As illustrated in Fig. 1, a main switch K0 and a branch switch K1 may be arranged in the power distribution apparatus 50. One end of the main switch K0 may be connected to the power grid 10 through the main power line, and another end of the main switch K0 may be connected to one end of the branch switch K1 through the main power line. Another end of the branch switch K1 may be connected to the first branch. In this way, a corresponding circuit or loop is formed in a case where the main switch K0 is ON and the branch switch K1 is ON, so as to realize power supply.

In the present embodiment, the first current sensing module CT1 may be configured to acquire the first current direction on the main power line, and the second current sensing module CT2 may be configured to acquire at least one of the second current direction or magnitude on the first branch. The energy management system may perform regulation of charge-discharge state on the first energy storage system 30 on the first branch, and control the load parameter on the first branch to be less than or equal to the rated parameter of the first branch, so as to perform power limiting protection on the first branch and ensure electricity use safety.

As illustrated in Fig. 2, Fig. 2 is a structural schematic diagram of an energy management system according to an embodiment of the present disclosure. The energy management system may include the first current sensing module CT1, the second current sensing module CT2, the first energy storage system 30, a local power generation device 40, the control device 20 and the power distribution apparatus 50.

In the following description with respect to Fig. 2, various regulation instructions may be generated by the control device 20. However, as described above, such regulation instructions may also be generated by the first energy storage system 30 or another part of the energy management system, which is not limited herein.

The first current sensing module CT1 may be configured to be coupled to the main power line of the power grid 10, and may be configured to acquire the first current direction on the main power line. In some embodiments, the first current sensing module CT1 may be a wireless current sensing module, and may include the current transformer and the wireless communication module. The current transformer may be sleeved on the main power line of the power grid 10 to acquire at least one of the first current direction or magnitude on the main power line, and then transmit the acquired at least one of first current direction or magnitude through the wireless communication module, for example, to the control device 20, the first energy storage system 30, or another part of the energy management system, which is not limited herein.

The second current sensing module CT2 may be configured to be coupled to the first branch of the indoor wiring, and may be configured to acquire at least one of the second current direction or magnitude on the first branch. Another electrical equipment may be coupled on the first branch, such as the electrical equipment 1 and the electrical equipment 2 in Fig. 1. In some embodiments, the second current sensing module CT2 may be a wireless current sensing module, and may include a current transformer and a wireless communication module. The current transformer may be sleeved on the first branch of the indoor wiring to acquire at least one of the second current direction or magnitude on the first branch, and then transmit the acquired at least one of second current direction or magnitude on the first branch through the wireless communication module, for example, to the control device 20, the first energy storage system 30, or another part of the energy management system, which is not limited herein.

The first energy storage system 30 may be configured to be coupled to the first branch. In some embodiments, a number of coupling points (sockets) may be configured to be coupled to the first branch. The first energy storage system 30 may be connected to a coupling point, and may be configured to receive power from the first branch (charge) and supply power to the first branch (discharge).

The local power generation device 40 may be configured to be coupled to a second branch of the indoor wiring. The second branch may be connected in parallel with the first branch. The local power generation device 40 may be, for example, a wind turbine, a backup generator, a photovoltaic device, or the like, which is not specifically limited herein. The local power generation device 40 may generate electric energy and transmit the electric energy to the second branch. In some embodiments, the photovoltaic device may be configured to convert solar energy into electrical energy and transmit the electrical energy to the second branch. In some embodiments, an electrical equipment may also be configured to be coupled to the second branch.

The control device 20 may be in communication connection with the first current sensing module CT1, the first energy storage system 30 and the second current sensing module CT2. Wireless communication is indicated by dashed lines in Fig. 2). The control device 20 may be configured to send, according to at least one of the first current direction, the second current direction or magnitude, or the output parameter of the local power generation device 40, the regulation instruction to the first energy storage system 30. The first energy storage system 30 may be configured to perform the regulation of charge-discharge state according to the regulation instruction, so that the load parameter on the first branch is less than or equal to the rated parameter of the first branch. In some embodiments, the control device 20 may include a smart electric meter. The processing module and the wireless communication module may be arranged in the smart electric meter. The smart electric meter may be in wireless communication connection with the first current sensing module CT1, the first energy storage system 30, the second current sensing module CT2 and a third current sensing module CT3. The control device 20 may know the output parameter of the local power generation device 40 in advance. The output parameter of the local power generation device 40 may include at least one of output current and output power.

For example, in a case where the first current flows to the indoor wiring along the first current direction, it is indicated that the power grid 10 is supplying power to the indoor wiring. In a case where the first current flows to the power grid 10 along the first current direction, it is indicated that the local power generation device 40 and another device are supplying power to the power grid 10.

Therefore, in a case where the local power generation device 40 is in operation, for the rational utilization of the electrical energy of the local power generation device 40, the control device 20 may send, according to at least one of the first current direction, the second current direction or magnitude, or the output parameter of the local power generation device 40, the regulation instruction to the first energy storage system 30. The first energy storage system 30 may be configured to perform the regulation of charge-discharge state according to the regulation instruction, so that the load parameter on the first branch is less than or equal to the rated parameter of the first branch. In some embodiments, when the first energy storage system 30 is in a discharge mode and current flows out of the first branch, the discharge parameter of the first energy storage system 30 is greater than the load parameter on the first branch. At this time, the first energy storage system 30 supplies power to indoor equipment from the first branch. The control device 20 may be configured to limit the discharge parameter of the first energy storage system 30 to be less than or equal to the rated parameter of the first branch, so as to ensure that the first branch does not suffer from overcurrent, overload or circuit breaker protection actuation caused by an overlarge discharge parameter of the first energy storage system 30, thereby guaranteeing the electricity use safety of the first branch.

A circuit or loop may be set for the main power line, the first branch and the second branch through the power distribution apparatus 50. That is, the main power line, the first branch and the second branch may form the service entrance circuit with the power distribution apparatus 50. The main power line, the first branch and the second branch may conduct or disconnect the service entrance circuit through the power distribution apparatus 50. As illustrated in Fig. 2, the main switch K0, the branch switch K1 and a branch switch K2 may be arranged in the power distribution apparatus 50. One end of the main switch K0 may be connected to the power grid 10 through the main power line, and another end of the main switch K0 may be connected to one end of the branch switch K1 and the branch switch K2 through the main power line. Another end of the branch switch K1 may be connected to the first branch, and another end of the branch switch K2 may be connected to the second branch. In this way, in a case where the main switch K0 is ON, and at least one of the branch switch K1 or the branch switch K2 is ON, a corresponding service entrance circuit may be formed, so as to realize power supply.

In the present embodiment, the energy management system may use the first current sensing module CT1 to acquire the first current direction on the main power line, and use the second current sensing module CT2 to acquire at least one of the second current direction or magnitude on the first branch. The control device 20 may be in communication connection with the first current sensing module CT1, the first energy storage system 30 and the second current sensing module CT2. The control device 20 may perform the regulation of charge-discharge state on the first energy storage system 30 on the first branch, and control the load parameter on the first branch to be less than or equal to the rated parameter of the first branch, so as to perform power limiting protection on the first branch and ensure electricity use safety.

In some embodiments, in a case where the first current flows to the indoor wiring along the first current direction, the control device 20 may be further configured to receive the present discharge parameter sent by the first energy storage system 30. In a case where a sum of the present discharge parameter and the output parameter of the local power generation device 40 is less than the total load parameter of the indoor wiring, the control device 20 may be configured to send the first regulation instruction to the first energy storage system 30. The first energy storage system 30 may be further configured to increase the present discharge parameter according to the first regulation instruction. For example, the present discharge parameter of the first energy storage system 30 may be increased until the first current reaches the preset near-zero threshold, and substantially or completely stops flowing to the indoor wiring, and then the first energy storage system 30 may maintain the discharge power at this time for discharging.

In a case where the local power generation device 40 is in operation, the electrical energy provided by the local power generation device 40 and the first energy storage system 30 may be usually used to save the use of electrical energy from the power grid 10. Under this condition, if the control device 20 detects that the first current flows to the indoor wiring along the first current direction, it is indicated that the electrical energy from the power grid 10 is still being used, which means the electrical energy provided by the local power generation device 40 and the first energy storage system 30 cannot meet the total load parameter of the indoor wiring. Therefore, in a case where the control device 20 detects that the sum of the present discharge parameter and the output parameter of the local power generation device 40 is less than the total load parameter of the indoor wiring, the control device 20 may send the first regulation instruction to the first energy storage system 30. The first energy storage system 30 may be further configured to increase the present discharge parameter according to the first regulation instruction. By controlling the first energy storage system 30 to increase the discharge power, the indoor load may use the power provided by the first energy storage system, reducing the use of electrical energy from the power grid 10. That is, the control device 20 may synchronously detect a real-time first current direction of the first current while the first energy storage system 30 is increasing the discharge power. In a case where the magnitude of first current reduces to a preset near-zero threshold, it is indicated that no electrical energy from the power grid 10 is used. That is, the magnitude of the first current of the power grid reaches the preset near-zero threshold, and substantially or completely stops flowing to the indoor wiring. At this time, the first energy storage system 30 may stop increasing the discharge power and just maintain the present discharge parameter. In this process, it is necessary to ensure that the load parameter on the first branch is less than or equal to the rated parameter of the first branch.

In some embodiments, in a case where the first current flows to the power grid 10 along the first current direction, the control device 20 may be further configured to receive the present discharge parameter sent by the first energy storage system 30. In a case where the sum of the present discharge parameter and the output parameter of the local power generation device 40 is greater than the total load parameter of the indoor wiring, the control device 20 may be configured to send the second regulation instruction to the first energy storage system 30. The first energy storage system 30 may be further configured to reduce the present discharge parameter according to the second regulation instruction.

The first energy storage system 30 may be further configured to switch, in a case where the present discharge parameter of the first energy storage system 30 is reduced to a preset minimum threshold and the first current still flows to the power grid 10 along the first current direction, to a charging mode. The preset minimum threshold may be typically set in a range from 0 mA to 20 mA.

In the process of using the electrical energy provided by the local power generation device 40 and the first energy storage system 30, if the control device 20 detects that the first current flows to the power grid 10 along the first current direction, it is indicated that the power provided by the local power generation device 40 and the first energy storage system 30 is greater than the total load parameter of the indoor wiring. Therefore, in a case where the control device 20 detects that the first current flows to the power grid 10 along the first current direction, the control device 20 would detect the present discharge parameter of the first energy storage system 30. In a case where it is detected that the sum of the present discharge parameter and the output parameter of the local power generation device 40 is greater than the total load parameter of the indoor wiring, the control device 20 may send the second regulation instruction to the first energy storage system 30. The first energy storage system 30 may be further configured to reduce the present discharge parameter according to the second regulation instruction, so that the first current reaches the preset near-zero threshold, and substantially or completely stops flowing to the power grid. By controlling the first energy storage system 30 to reduce the discharge parameter, the power provided by the local power generation device 40 and the first energy storage system 30 is reduced, thereby reducing the flow of electrical energy to the power grid 10. That is, the control device 20 may synchronously detect the real-time first current direction of the first current while the first energy storage system 30 is reducing the discharge power or discharge current. In a case where the magnitude of the first current reduces to a preset near-zero threshold, it is indicated that the first current substantially does not flow to the power grid 10. At this time, the control device 20 may control the first energy storage system 30 to stop reducing the discharge parameter and just maintain the present discharge parameter. In this process, it is necessary to ensure that the load parameter on the first branch is less than or equal to the rated parameter of the first branch.

Furthermore, in a case where the control device 20 detects that the present discharge parameter of the first energy storage system 30 is reduced to a preset minimum threshold and the first current still flows to the power grid 10 along the first current direction, it is indicated that the power provided by the local power generation device 40 is greater than the total load power of the indoor wiring, or the provided current is greater than the total current of the indoor wiring. Therefore, the control device 20 may control the first energy storage system 30 to switch to the charging mode, making the first energy storage system 30 also a load of the indoor wiring to reduce the flow of electrical energy to the power grid 10. In this process, the control device 20 may determine, according to an actual load difference between the output parameter of the local power generation device 40 and the total load parameter of the indoor wiring, the charging parameter of the first energy storage system 30.

In some embodiments, after the first energy storage system 30 switches to the charging mode, the control device 20 may be further configured to send, in a case where the present load parameter of the electrical equipment (not including the first energy storage system 30) of the first branch is greater than the historical load parameter of the electrical equipment of the first branch, a sixth regulation instruction to the first energy storage system 30. The first energy storage system may be further configured to reduce the charging parameter according to the sixth regulation instruction, so that the load parameter on the first branch is less than or equal to the rated parameter of the first branch. For the purposes of the present disclosure, the term "historical load parameter" of the first branch may refer to the load power or load current value of the first branch collected and stored in a previous sampling period.

If the present load parameter of the first branch is greater than the load parameter of the first branch during historical sampling, it is indicated that a new load is added to the first branch. To ensure that the load parameter on the first branch is less than or equal to the rated parameter of the first branch, the control device 20 may send the sixth regulation instruction to the first energy storage system 30. The first energy storage system 30 may be further configured to reduce the charging parameter according to the sixth regulation instruction. The control device 20 may calculate, according to the present load parameter and the previous (or historical) branch parameter, the actual increased load parameter, and then accurately control the first energy storage system 30 to reduce the charging parameter according to the increased load parameter.

In the embodiments of the present disclosure, the following logic shall be ensured.

In a case where the first energy storage system 30 is in the charging mode, if the load parameter on the first branch increases, and triggers the load parameter on the first branch to be greater than or equal to the rated parameter of the first branch, the charging parameter of the first energy storage system 30 shall be reduced. On the contrary, the charging parameter of the first energy storage system 30 shall be increased to maintain the load parameter on the first branch equal to the rated parameter of the first branch, so as to achieve the maximum charging parameter of the energy storage.

In a case where the first energy storage system 30 is in the discharge mode, if the load parameter on the first branch increases, and triggers the load parameter on the first branch to be greater than or equal to the rated parameter of the branch, the discharge parameter of the first energy storage system 30 shall be reduced, thereby increasing the electrical energy flowing from the power grid into the first branch and prompt the circuit breaker to disconnect the first branch.. On the contrary, the discharge parameter of the first energy storage system 30 shall be increased to maintain the load parameter on the first branch equal to the rated parameter of the first branch, so as to achieve the maximum discharge parameter of the first energy storage system 30.

For example, the required power of electrical equipment 1 is 2000 W, the required power of electrical equipment 2 is 2000 W, and the rated power of the first branch is 3000 W. In a scenario where the first branch is powered solely by the power grid, the total load power of electrical equipment 1 and electrical equipment 2 is greater than the rated power of the first branch, which will cause overload of the first branch and further cause a circuit breaker to disconnect the power grid from the first branch to implement overload protection. When the first energy storage system 30 is in the discharge mode, the power grid and the first energy storage system 30 jointly supply power to electrical equipment 1 and electrical equipment 2 on the first branch. Exemplarily, if the first energy storage system 30 outputs a discharge power of 2500 W, the power grid only needs to additionally supply 1500 W to meet the total load demand. At this time, although the actual total load power of the first branch is 4000 W, which exceeds the rated power of the first branch of 3000 W, the power undertaken by the power grid alone is 1500 W, which does not exceed the limit, so the branch overload protection will not be triggered, the circuit breaker remains closed, and the power supply loop between the power grid and the first branch remains connected. However, at this time, the actual load of the first branch has exceeded the limit, posing potential risks of heating, aging and even fire, thereby endangering electricity use safety. Under such operating conditions, the first energy storage system 30 may be controlled to reduce its own discharge power. As the discharge power of the first energy storage system 30 is lowered, the power supply power to be compensated by the power grid will increase accordingly to ensure the normal operation of electrical equipment 1 and electrical equipment 2. When the power output by the power grid alone exceeds the rated power of the first branch, the overload protection of the circuit breaker of the first branch can be triggered normally, and the circuit breaker disconnects the connection loop between the power grid and the first branch, so as to realize the safety protection of the indoor power distribution lines and electrical equipment. On the contrary, if the total load power of electrical equipment 1 and electrical equipment 2 is less than the rated power of the first branch, due to the joint power supply by "dual power sources" including the power grid and the first energy storage system 30, if the first energy storage system 30 increases its own discharge power at this time, the power provided by the power grid will decrease, thereby reducing the use of power grid power and lowering the dependence of household electrical equipment on power grid power.

In other words, it is necessary to ensure that the load parameter on the first branch is less than or equal to the rated parameter of the first branch. In some embodiments, the load parameter on the first branch shall be maintained equal to the rated parameter of the first branch, so as to realize the maximization of energy storage utilization.

In some embodiments, in the process of reducing the discharge parameter of the first energy storage system 30, the specific value of the reduced discharge parameter may be dynamically adjusted in combination with the temperature in the first energy storage system 30, the battery SOC, the electrical energy provided by the local power generation device, a household load, and the corresponding power of the power grid. For example, the reduction may be phased or linear, and shall be dynamically adjusted according to the actual situation.

In some embodiments, after the discharge parameter of first energy storage system 30 is reduced and the rated parameter is met on the first branch, the first energy storage system 30 or the control device 20 may record the current operating condition, and perform advance derating processing in a case where a similar operating condition is encountered subsequently.

In some embodiments, the control device 20 may trigger circuit break protection in a case where derating occurs multiple times within a short period.

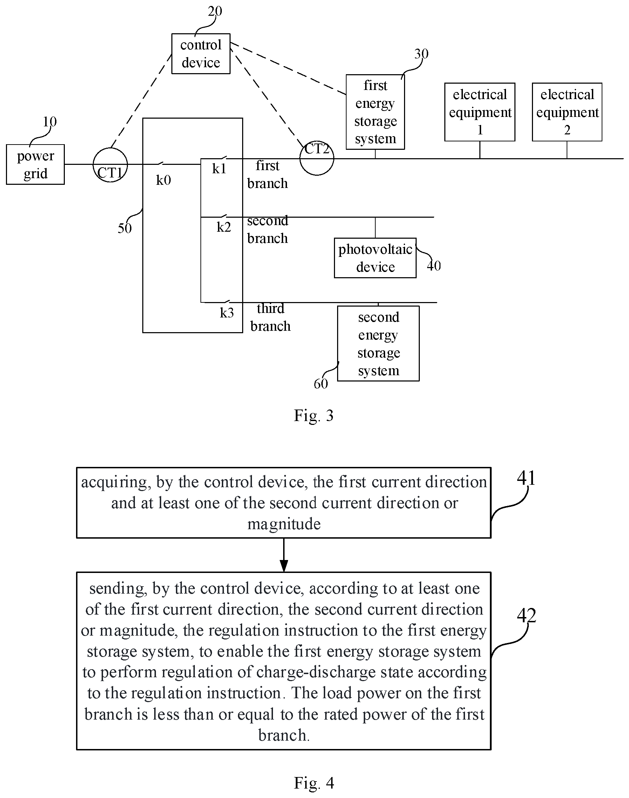

As illustrated in Fig. 3, Fig. 3 is a structural schematic diagram of the energy management system according to an embodiment of the present disclosure. The energy management system may include the first current sensing module CT1, the second current sensing module CT2, the first energy storage system 30, the control device 20, the local power generation device 40, a second energy storage system 60 and the power distribution apparatus 50.

In the following description with respect to Fig. 3, various regulation instructions may be generated by the control device 20. However, as described above, such regulation instructions may also be generated by the first energy storage system 30 or another part of the energy management system, which is not specifically limited herein.

The first current sensing module CT1 may be configured to be coupled to the main power line of the power grid 10, and may be configured to acquire the first current direction on the main power line.

The second current sensing module CT2 may be configured to be coupled to the first branch of the indoor wiring, and may be configured to acquire at least one of the second current direction or magnitude on the first branch. Another electrical equipment, such as the electrical equipment 1 and the electrical equipment 2 in Fig. 2, may be coupled on the first branch.

The first energy storage system 30 may be configured to be coupled to the first branch.

The local power generation device 40 may be configured to be coupled to the second branch of the indoor wiring. The second branch may be connected in parallel with the first branch.

The control device 20 may be in communication connection, for example wireless communication connection, with the first current sensing module CT1, the first energy storage system 30 and the second current sensing module CT2.

The second energy storage system 60 may be configured to be coupled to a third branch of the indoor wiring, and may be in wireless communication connection with the control device 20. The second energy storage system 60 may be configured to receive a third regulation instruction sent by the control device 20 and switch to the charging mode. The third regulation instruction may be generated, in a case where the first energy storage system 30 completes charging and the output parameter of the local power generation device 40 is greater than the present total load parameter of the indoor wiring, by the control device 20. The third branch may be connected in parallel with the first branch. In some embodiments, only the second energy storage system 60 is configured to be coupled to the third branch. In some embodiments, initially, remaining power of the second energy storage system 60 needs to be less than that of the first energy storage system 30, so that the second energy storage system 60 may be switched to the charging mode subsequently. In some embodiments, corresponding electrical equipment may be configured to be coupled to the third branch, and the specific number of the electrical equipment may be determined according to the actual situation. In some embodiments, no electrical equipment may be configured to be coupled to the third branch, and only the second energy storage system 60 may exist on the third branch. In a case where corresponding electrical equipment is configured to be coupled to the third branch, the control device may control the second energy storage system 60 in the same manner as controlling the first energy storage system 30, so as to control the load parameter on the third branch to be less than or equal to the rated parameter of the third branch, perform power limiting or current limiting protection on the third branch and ensure electricity use safety.

In some embodiments, after the first energy storage system 30 completes charging, the first energy storage system 30 may no longer act as a load to continue sharing power. If the output parameter of the local power generation device 40 is greater than the present total load parameter of the indoor wiring, the control device 20 will detect again that the first current flows to the power grid 10 along the first current direction. Therefore, to solve this problem, the control device 20 may utilize the second energy storage system 60 on the third branch and send the third regulation instruction to the second energy storage system 60, making the second energy storage system 60 switch to the charging mode and act as a load, so as to reduce the flow of electrical energy to the power grid 10.

In some embodiments, after the second energy storage system 60 switches to the charging mode, the control device 20 may be further configured to send, in a case where the present load parameter of the first branch is less than the historical load parameter of the first branch, a fourth regulation instruction to the second energy storage system 60. The second energy storage system 60 may be further configured to increase the charging parameter according to the fourth regulation instruction, so that the first current reaches the preset near-zero threshold, and substantially or completely does not flow to the power grid.

If the present load parameter of the first branch is less than the historical load parameter of the first branch, it is indicated that the load on the first branch is reduced. To reduce or avoid the first current flowing to the power grid 10, the control device 20 may send the fourth regulation instruction to the second energy storage system 60. The second energy storage system 60 may be further configured to increase the charging parameter according to the fourth regulation instruction. The control device 20 may calculate an actual reduced load parameter according to the present load parameter and the historical load parameter of the first branch, and then accurately control the second energy storage system 60 to increase the charging parameter according to the reduced load parameter.

In some embodiments, the second energy storage system 60 may be further configured to receive a fifth regulation instruction sent by the control device 20, so as to switch to the discharge mode. In a case where the first energy storage system 30 is adjusted to the maximum discharge parameter and the first current still flows to the indoor wiring, the fifth regulation instruction may be generated by the control device 20.

In a case where the first energy storage system 30 is adjusted to the maximum discharge parameter and the first current still flows to the indoor wiring along the first current direction, it is still necessary to increase the discharging parameter of the second energy storage system 60 to reduce the use of the power grid 10. Therefore, the control device 20 may send the fifth regulation instruction to the second energy storage system 60, thereby controlling the second energy storage system 60 to switch to the discharge mode, and utilizing the electrical energy of the second energy storage system 60 for the use by the load. In this process, the control device 20 may determine the discharge parameter of the second energy storage system 60 according to an actual load parameter difference between the parameter provided by the local power generation device 40 and the total load parameter of the indoor wiring.

Furthermore, the circuit may be set for the main power line, the first branch, the second branch and the third branch through the power distribution apparatus 50. That is, the main power line, the first branch, the second branch and the third branch may form the service entrance circuit with the power distribution apparatus 50. The main power line, the first branch, the second branch and the third branch may conduct or disconnect the service entrance circuit through the power distribution apparatus 50. As illustrated in Fig. 3, the main switch K0, the branch switch K1, the branch switch K2 and a branch switch K3 may be arranged in the power distribution apparatus 50. One end of the main switch K0 may be connected to the power grid 10 through the main power line. Another end of the main switch K0 may be connected to one end of the branch switch K1, the branch switch K2 and the branch switch K3 through the main power line. Another end of the branch switch K1 may be connected to the first branch, another end of the branch switch K2 may be connected to the second branch, and another end of the branch switch K3 may be connected to the third branch. In this way, in a case where the main switch K0 is ON, and at least one of the branch switch K1, the branch switch K2 or the branch switch K3 is ON, a corresponding service entrance circuit may be formed, so as to realize power supply.

In some other embodiments, the energy management system may be provided with a number of branches. A corresponding load and an energy storage system may be configured to be coupled to each branch.

In the present embodiment, the energy management system may use the first current sensing module CT1 to acquire the first current direction on the main power line, and use the second current sensing module CT2 to acquire at least one of the second current direction or magnitude on the first branch. The control device 20 may be in communication connection with the first current sensing module CT1, the first energy storage system 30 and the second current sensing module CT2. In this way, by adopting wireless communication, the entire energy management system may be conveniently deployed without modifying existing circuits or laying additional wires. Furthermore, the control device 20 may perform regulation of charge-discharge state on the first energy storage system 30 on the first branch, and control the load parameter on the first branch to be less than or equal to the rated parameter of the first branch, so as to perform power limiting or current limiting protection on the first branch and ensure electricity use safety.

In addition, in a case where the first energy storage system 30 fails to meet the relevant conditions, the second energy storage system 60 may be used to meet those conditions, thereby reducing usage of the power grid 10.

In some embodiments, a matched wireless current sensing module may be configured to be coupled to the above-mentioned second branch, and the wireless current sensing module may be in wireless communication connection with the control device 20. The wireless current sensing module may be configured to acquire at least one of the current direction or magnitude on the second branch and send the same to the control device 20, so that the control device 20 may obtain the actual output parameter of the local power generation device 40 on the second branch more accurately. The control device 20 may thus perform better charge-discharge regulation on the first energy storage system on the first branch.

In some embodiments, the wireless current sensing module and the energy storage system mentioned in the present disclosure may be connected to the control device 20 in a wireless or wired manner, thereby providing more connection modes, facilitating the reception of data through more modes, and avoiding communication failure caused by failure of a single communication mode.

As illustrated in Fig. 4, Fig. 4 is a schematic flow chart of a control method for an energy management system according to an embodiment of the present disclosure. The energy management system may be one provided in the above technical solution, and the control method may include the following operations at blocks of Fig. 4.

The operation at block 41: acquiring, by a control device, a first current direction, and at least one of a second current direction or magnitude.

The operation at block 42: sending, by a control device, according to at least one of the first current direction, the second current direction or magnitude, a regulation instruction to a first energy storage system, to enable the first energy storage system to perform regulation of charge-discharge state according to the regulation instruction. The load parameter on the first branch may be less than or equal to the rated parameter of the first branch.

In some embodiments, in a case where the energy management system further includes the local power generation device, the control device may send, according to at least one of the first current direction, the second current direction or magnitude, or the output parameter of the local power generation device, the regulation instruction to the first energy storage system. In this way, the first energy storage system may perform the regulation of charge-discharge state according to the regulation instruction. The load parameter on the first branch is less than or equal to the rated parameter of the first branch.

In some embodiments, in a case where the first current flows to the indoor wiring along the first current direction, the control device may receive the present discharge parameter sent by the first energy storage system. In a case where the sum of the present discharge parameter and the output parameter of the local power generation device is less than the total load parameter of the indoor wiring, the control device may send the first regulation instruction to the first energy storage system, so that the first energy storage system may increase, according to the first regulation instruction, the present discharge parameter until the magnitude of the first current reaches a preset near-zero threshold, and substantially or completely stops flowing to the indoor wiring.

In some embodiments, in a case where the first current flows to the power grid along the first current direction, the control device may receive the present discharge parameter sent by the first energy storage system. In a case where the sum of the present discharge parameter and the output parameter of the local power generation device is greater than the total load parameter of the indoor wiring, the control device may send the second regulation instruction to the first energy storage system, so that the first energy storage system may reduce the present discharge parameter according to the second regulation instruction, making the first current stop flowing to the power grid.

In some embodiments, in a case where the present discharge parameter of the first energy storage system is reduced to a preset minimum threshold and the first current still flows to the power grid, the first energy storage system may switch to the charging mode.

In some embodiments, the energy management system may further include the second energy storage system. In a case where the first energy storage system completes charging (i.e., full) and the output parameter of the local power generation device is greater than the present total load parameter of the indoor wiring, the control device may generate the third regulation instruction. The control device may send the third regulation instruction to the second energy storage system. The second energy storage system may switch to the charging mode according to the third regulation instruction.

In some embodiments, after the second energy storage system switches to the charging mode, in a case where the present load parameter of the first branch is less than the historical load parameter of the first branch, the control device may send the fourth regulation instruction to the second energy storage system. In this way, the second energy storage system may increase the charging parameter according to the fourth regulation instruction, thereby preventing the first current from flowing to the power grid.

In some embodiments, in a case where the first energy storage system is adjusted to the maximum discharge parameter and the first current still flows to the indoor wiring, the control device may generate the fifth regulation instruction. The control device may send the fifth regulation instruction to the second energy storage system, so that the second energy storage system may switch to the discharge mode according to the fifth regulation instruction.

In some embodiments, after the first energy storage system switches to the charging mode, in a case where the present load parameter of the first branch is greater than the historical load parameter of the first branch, the control device may send the sixth regulation instruction to the first energy storage system. In this way, the first energy storage system may reduce the charging parameter according to the sixth regulation instruction, making the load parameter on the first branch less than or equal to the rated parameter of the first branch.

In summary, the control method for the energy management system and the energy management system provided by the present disclosure may use the first current sensing module CT1 to acquire the first current direction on the main power line, and use the second current sensing module CT2 to acquire at least one of the second current direction or magnitude on a first branch. The control device 20 may perform the regulation of charge-discharge state on the first energy storage system 30 on the first branch, and control the load parameter on the first branch to be less than or equal to the rated parameter of the first branch, so as to perform the power limiting or current limiting protection on the first branch and ensure electricity use safety. Further, the control device 20 may be in wireless communication connection with the first wireless current sensing module CT1, the first energy storage system 30 and the second wireless current sensing module CT2. In this way, by adopting wireless communication, the entire energy management system may be conveniently deployed without modifying existing circuits or laying additional wires.

In addition, in a case where the local power generation device 40 is provided in the energy management system, the control device 20 may still perform the regulation of charge-discharge state on the first energy storage system 30 on the first branch according to at least one of the first current direction, the second current direction or magnitude, or the output parameter of the local power generation device 40, and control the load parameter on the first branch to be less than or equal to the rated parameter of the first branch, so as to perform the power limiting or current limiting protection on the first branch and ensure electricity use safety.

In addition, in a case where another energy storage system is present in the energy management system, the second energy storage system 60 may be configured to assist in solving the problems of power grid supply and power grid reception in a case where the first energy storage system 30 cannot cooperate to solve such problems, thereby reducing the use of the power grid 10.

In some embodiments, the present disclosure provides a method for energy management performed by a control device. The method may include: receiving first data indicative of the first current direction from the first current sensing module coupled to the main power line; receiving second data indicative of at least one of the second current direction or magnitude from the second current sensing module coupled to the first branch of an indoor wiring; generating the regulation instruction according to at least one of the first data or the second data; and, sending the regulation instruction to the first energy storage system coupled to the first branch, so as to regulate the charge-discharge state of the first energy storage system and keep a load parameter of the first branch less than or equal to a rated parameter of the first branch.

In some embodiments, the method further includes receiving third data indicative of the output parameter of the local power generation device, and generating the regulation instruction according to at least one of the first data, the second data, or the third data.

In some embodiments, in a case where the first current flows to an indoor wiring along the first current direction, the method may include: receiving the present discharge parameter from the first energy storage system; in a case where a sum of the present discharge parameter and the output parameter of the local power generation device is less than total load parameter of the indoor wiring, generating a first regulation instruction; and, sending the first regulation instruction to the first energy storage system, to cause the first energy storage system to increase the present discharge parameter until the magnitude of the first current reaches a preset near-zero threshold.

In some embodiments, in a case where the first current flows to the power grid along the first current direction, the method may include: in a case where a sum of the present discharge parameter and the output parameter of the local power generation device is greater than total load parameter of the indoor wiring, generating the second regulation instruction; sending the second regulation instruction to the first energy storage system, to cause the first energy storage system to reduce the present discharge parameter until the magnitude of the first current reaches a preset near-zero threshold.

In some embodiments, in a case where the present discharge parameter is reduced to a preset minimum threshold and the first current still flows to the power grid, the method further includes: switching the first energy storage system to a charging mode.

In some embodiments, in a case where the first energy storage system is in a discharge mode and the load parameter of the first branch increases to be greater than or equal to the rated parameter of the first branch, the method further includes: sending the regulation instruction to the first energy storage system, to cause the first energy storage system to reduce the discharge parameter.

In some embodiments, the control device 20 may include a communication interface and at least one processor coupled to the communication interface. The at least one processor may be configured to perform the above-mentioned method for energy management. Specifically, the at least one processor may be configured to: receive, via the communication interface, the first data indicative of the first current direction from the first current sensing module CT1; receive, via the communication interface, the second data indicative of at least one of the second current direction or magnitude from the second current sensing module CT2; generate the regulation instruction according to at least one of the first data or the second data; and, send, via the communication interface, the regulation instruction to the first energy storage system 30 coupled to the first branch, such that the first energy storage system 30 may perform regulation of a charge-discharge state to keep the load parameter on the first branch less than or equal to the rated parameter of the first branch.

In the several implementations provided by the present disclosure, the disclosed method and device may be implemented in another way. For example, the device implementations described above are merely schematic. For example, the division of the circuits or units is only a logical function division, and there may be other division methods in actual implementation. For example, a plurality of units or components may be combined or integrated into another system, or some features may be omitted or not executed.

The units described as separate components may or may not be physically separated, and the components illustrated as units may or may not be physical units. That is, they may be located in one place, or may be distributed on multiple network units. Some or all of the units may be selected according to actual needs to achieve the objectives of the technical solutions of the present implementation.

In addition, each functional unit in each implementation of the present disclosure may be integrated into one processing unit, or each unit may exist physically alone, or two or more units may be integrated into one unit. The above-mentioned integrated units may be implemented in the form of hardware or in the form of software functional units.

## Claims

1. An energy management system, comprising:
a first current sensing module (CT1), configured to be coupled to a main power line of a power grid (10), and configured to acquire a first current direction on the main power line;
a second current sensing module (CT2), configured to be coupled to a first branch of an indoor wiring, and configured to acquire at least one of a second current direction or magnitude on the first branch, wherein electrical equipment (1, 2) is coupled on the first branch; and
a first energy storage system (30), configured to be coupled to the first branch; wherein the first energy storage system (30) and the electrical equipment (1, 2) are connected in parallel on the first branch at a side of the second current sensing module away from the main power line;
wherein the energy management system is configured to generate, according to at least one of the first current direction, the second current direction or magnitude, a regulation instruction;
wherein the first energy storage system (30) is configured to perform regulation of charge-discharge state according to the regulation instruction, and keep load parameter on the first branch less than or equal to rated parameter of the first branch, the load parameter comprises load power or load current.

2. The energy management system as claimed in claim 1, wherein
the first energy storage system (30) is communicatively connected to the first current sensing module and the second current sensing module, and is configured to generate the regulation instruction according to at least one of the first current direction, or the second current direction or magnitude; and/or
the energy management system further comprises a control device (20), the control device (20) is communicatively connected to the first current sensing module, the first energy storage system (30) and the second current sensing module, and is configured to send the regulation instruction to the first energy storage system (30) according to at least one of the first current direction, or the second current direction or magnitude.

3. The energy management system as claimed in claim 1, wherein
the first current sensing module is a wireless current sensing module; and/or
the second current sensing module is a wireless current sensing module.

4. The energy management system as claimed in claim 1, wherein
the energy management system further comprises a local power generation device (40) configured to be coupled to a second branch of the indoor wiring; the second branch is connected in parallel with the first branch; and
wherein the energy management system is configured to generate the regulation instruction according to at least one of the first current direction, the second current direction or magnitude, or output parameter of the local power generation device (40).

5. The energy management system as claimed in claim 4, wherein
in a case where a first current flows to the indoor wiring along the first current direction, the energy management system is further configured to:
obtain present discharge parameter sent by the first energy storage system (30); and
generate, in a case where a sum of the present discharge parameter and output parameter of the local power generation device (40) is less than total load parameter of the indoor wiring, a first regulation instruction; and
wherein the first energy storage system (30) is further configured to increase the present discharge parameter according to the first regulation instruction until the magnitude of the first current reaches a preset near-zero threshold.

6. The energy management system as claimed in claim 4, wherein
in a case where the first current flows to the power grid (10) along the first current direction, the energy management system is further configured to:
obtain the present discharge parameter sent by the first energy storage system (30); and
generate, in a case where a sum of the present discharge parameter and output parameter of the local power generation device (40) is greater than total load parameter of the indoor wiring, a second regulation instruction;
wherein the first energy storage system (30) is further configured to reduce the present discharge parameter according to the second regulation instruction, and cause the magnitude of the first current to reach a preset near-zero threshold.

7. The energy management system as claimed in claim 6, wherein
the first energy storage system (30) is further configured to:
switch to a charging mode in a case where the present discharge parameter is reduced to a preset minimum threshold and the first current still flows to the power grid (10).

8. The energy management system as claimed in claim 7, further comprising:
a second energy storage system (60), configured to be coupled to a third branch of the indoor wiring, and configured to:
receive a third regulation instruction to switch to the charging mode;
wherein the third regulation instruction is generated by the energy management system in a case where the first energy storage system (30) completes charging and the output parameter of the local power generation device (40) is greater than present total load parameter of the indoor wiring;
wherein the third branch is connected in parallel with the first branch.

9. The energy management system as claimed in claim 8, wherein
after the second energy storage system (60) switches to the charging mode, the energy management system is further configured to:
generate a fourth regulation instruction for the second energy storage system (60) in a case where present load parameter of the first branch is less than historical load parameter of the first branch;
the second energy storage system (60) is further configured to:
increase charging parameter according to the fourth regulation instruction, and reduce the magnitude of the first current to a preset near-zero threshold.

10. The energy management system as claimed in claim 8, wherein
the second energy storage system (60) is further configured to:
receive a fifth regulation instruction and switch to a discharge mode;
wherein the fifth regulation instruction is generated by the energy management system in a case where the first energy storage system (30) is adjusted to maximum discharge parameter and the first current still flows to the indoor wiring.

11. The energy management system as claimed in claim 7, wherein
after the first energy storage system (30) switches to the charging mode, the energy management system is further configured to:
generate a sixth regulation instruction in a case where present load parameter of the electrical equipment (1, 2) of the first branch is greater than historical load parameter of the electrical equipment (1, 2) of the first branch;
the first energy storage system (30) is further configured to:
reduce charging parameter according to the sixth regulation instruction, and keep the load parameter on the first branch less than or equal to the rated parameter of the first branch.

12. The energy management system as claimed in claim1, wherein
in a case where the first energy storage system (30) is in a discharge mode and the load parameter of the first branch increases to be greater than or equal to the rated parameter of the first branch, the energy management system is configured to generate the regulation instruction, and the first energy storage system (30) is configured to reduce the discharge parameter in response to the regulation instruction.

13. The energy management system as claimed in any one of claims 4 to 11, wherein
the energy management system further comprises a power distribution apparatus;
the main power line, the first branch, the second branch and the power distribution apparatus form a service entrance circuit; and the main power line, the first branch and the second branch conduct or disconnect the service entrance circuit through the power distribution apparatus.

14. A control method for the energy management system as claimed in any one of claims 1 to 13, comprising:
acquiring, by the control device (20), the first current direction, and at least one of the second current direction or magnitude; and
sending, by the control device (20), the regulation instruction to the first energy storage system (30) according to at least one of the first current direction, the second current direction or magnitude, and causing the first energy storage system (30) to perform a regulation of a charge-discharge state according to the regulation instruction;
wherein the load parameter on the first branch is less than or equal to the rated parameter of the first branch.

15. A control device (20) of the energy management system as claimed in any one of claims 1-13, comprising:
a communication interface; and
at least one processor coupled to the communication interface, wherein the at least one processor is configured to:
receive, via the communication interface, first data indicative of a first current direction from a first current sensing module configured to be coupled to a main power line;
receive, via the communication interface, second data indicative of at least one of a second current direction or magnitude from a second current sensing module configured to be coupled to a first branch of an indoor wiring; and
generate a regulation instruction according to at least one of the first data or the second data; and
send, via the communication interface, the regulation instruction to the first energy storage system (30) configured to be coupled to a first branch, to cause the first energy storage system (30) to perform a regulation of a charge-discharge state, such that a load parameter on the first branch is less than or equal to a rated parameter of the first branch.
